# EUROPEAN PATENT APPLICATION

(11) **EP 3 757 385 A1**
(43) Date of publication of application: **30.12.2020**
(21) Application number: 19757931.1
(22) Date of filing: 15.01.2019
(51) Int. Cl.: F03D 7/04

(54) **WIND POWER GENERATION DEVICE AND CONTROL METHOD FOR SAME**

(30) Priority: 23.02.2018 JP 2018030556
(71) Applicant: Hitachi, Ltd., Tokyo 100-8280 (JP)
(72) Inventor: YOSHIMURA, Masatoshi, Tokyo 100-8280 (JP); KUSUNO, Nobuhiro, Tokyo 100-8280 (JP); KAKUYA, Hiromu, Tokyo 100-8280 (JP)
(74) Representative: Strehl Schübel-Hopf & Partner
(86) International application number: PCT/JP2019/000829
(87) International publication number: WO 2019/163325

(57) **Abstract**

Provided are: a wind power generation device which can reduce a yaw deviation angle to increase power generation amount while reducing yaw driving amount to suppress mechanical wear; and a control method for same. This wind power generation device (1) is provided with: a rotor (4) that rotates upon receiving wind; a nacelle (5) that rotatably supports the rotor (4); a tower (7) that supports the nacelle in a yaw-rotatable manner; an adjustment device (8) that adjusts the yaw of the nacelle (5) on the basis of a yaw control command; and a control device (9) that determines the yaw control command to be transmitted to the adjustment device (8). The control device (9) is provided with: a yaw deviation angle calculation unit (301) that calculates a yaw deviation angle from the wind direction measured by a wind direction and velocity measuring unit and the direction of the rotor (4); an averaging unit (305) that averages the yaw deviation angle within a predetermined period; and a control command creation unit (306) that determines the yaw control command on the basis of the averaged yaw deviation angle, wherein the averaging unit (305) decreases the averaging time constant when the level of disturbance in the wind conditions is high, and advances the timing of starting and/or stopping the yaw rotation with respect to the yaw deviation angle.

## Description

### Technical Field

The present invention relates to a wind power generation device and a control method for the same and, in particular, to a wind power generation device and a control method for the same capable of improving the power generation performance and reducing mechanical wear of the wind power generation device.

### Background Art

A wind power generation device of a horizontal axis type has a yaw rotation mechanism of making a nacelle on which a windmill rotor is mounted rotate about the vertical axis. It is known that when a wind direction deviation (hereinafter, called yaw deviation angle) expressing a deviation angle between the azimuth of the rotary shaft of a windmill rotor (hereinafter, called yaw deviation angle) and the wind direction occurs, the wind power generation device operates so as to eliminate the yaw deviation angle by controlling the yaw rotation mechanism to prevent the power generation efficiency from deteriorating by decrease of the wind reception area of the rotor. As yaw control methods, for example, techniques described in patent literature 1, 2, and 3 are known.

### Citation List

### Patent Literature

Patent literature 1: Japanese Unexamined Patent Application Publication No. 2010-106727
Patent literature 2: U.S. Patent No. 9,273,668
Patent literature 3: U.S. Patent Publication No. 2014/0152013

### Summary of Invention

### Technical Problem

Wind conditions expressing wind direction and wind velocity at a certain point have fluctuation components having various cycles. Moreover, the characteristics of the cyclic fluctuation components vary depending on time zones. Since the fluctuation components are included at random in the wind conditions, in a general yaw control method, for example, when the yaw deviation angle of a predetermined period exceeds a predetermined threshold, a nacelle is yaw-rotated so that the yaw deviation angle becomes zero.

When the yaw deviation angle can be always maintained at zero by the yaw control, the power generation amount becomes the largest. However, in the case where the fluctuation speed of the wind direction is faster than the rotation speed of a nacelle, the nacelle azimuth cannot follow the wind direction. In the case where the fluctuation frequency of the wind direction is high and the wind direction changes to the opposite during yaw rotation, the nacelle is stopped in a state where the yaw deviation angle is high due to a response delay of the yaw control. In those cases, it is difficult to maintain the yaw deviation angle at zero. However, when the rotation speed of a nacelle is set too high or yaw-rotated highly sensitively to the yaw deviation angle, mechanical wear of a brake mechanism which stops rotation of a nacelle rotation mechanism or a nacelle occurs. When the yaw deviation angle is positively suppressed by using the control method, there is the possibility that mechanical wear increases.

In the method disclosed in the patent literature 1, in the case where the degree of fluctuation of the wind conditions at a certain site is high, when the wind direction fluctuates to the opposite direction during yaw rotation, stop of the yaw rotation delays and, when the yaw deviation angle is large, a nacelle is stopped. Therefore, the yaw deviation angle can be suppressed only in a short period, so that the power generation performance deteriorates. Moreover, by performing yaw rotation more than necessary, the drive amount of the yaw increases, and there is the possibility that mechanical wear increases.

Therefore, the present invention provides a wind power generation device and a method of controlling the same capable of suppressing mechanical wear by suppressing a yaw drive amount while improving a power generation amount by reducing a yaw deviation angle.

### Solution to Problem

To solve the problem, a wind power generation device according to the present invention has a rotor that rotates upon receiving wind, a nacelle that rotatably supports the rotor, a tower that supports the nacelle in a yaw rotatable manner, an adjustment device that adjusts the yaw of the nacelle on the basis of a yaw control command, and a control device that determines the yaw control command to be sent to the adjustment device. The control device includes: a yaw deviation angle calculation unit that calculates a yaw deviation angle from the wind direction measured by a wind direction/wind velocity measuring unit and the direction of the rotor; an averaging unit that averages the yaw deviation angle within a predetermined period; and a control command creation unit that determines the yaw control command on the basis of the average yaw deviation angle. When the level of disturbance in the wind conditions is high, the averaging unit decreases an averaged time constant and advances the timing of start of yaw rotation and/or stop of yaw rotation with respect to the yaw deviation angle.

A control method of a wind power generation device having a rotor that rotates upon receiving wind, a nacelle that rotatably supports the rotor, a tower that supports the nacelle in a yaw rotatable manner, an adjustment device that adjusts the yaw of the nacelle on the basis of a yaw control command, and a control device that determines the yaw control command to be sent to the adjustment device, includes the steps of: calculating a yaw deviation angle from a measured wind direction and the direction of the rotor; averaging the yaw direction angle within a predetermined period to obtain an average yaw deviation angle; when the level of disturbance in wind conditions is high, decreasing an averaged time constant, and advancing the timing of start of yaw rotation and/or stop of the yaw rotation with respect to the yaw deviation angle.

### Advantageous Effects of Invention

According to the present invention, the wind power generation device and the control method for the same capable of suppressing mechanical wear by suppressing a yaw drive amount while improving the power generation amount by reducing the yaw deviation angle can be provided.

Concretely, in the case where wind velocity of a cycle which is fast to some extent or wind direction fluctuation occurs frequently, by shortening the averaged time constant of the average yaw deviation angle used for determination of yaw rotation and suppressing a response delay at the time of yaw rotation stop, even when the wind direction fluctuation in the opposite direction occurs during yaw rotation, the rotation is stopped when the yaw deviation angle is small. Therefore, the yaw deviation angle when the yaw rotation stops decreases and the followability to the wind direction becomes high, so that the power generation performance improves. Further, by the prompt stop when the yaw deviation angle is small, the drive amount of the yaw decreases and the margin to the next rotation start increases, so that the wind power generation device and the control method for the same capable of realizing both decrease in the number of times of yaw drives and reduction in mechanical wear of the wind power generation device can be provided.

The other objects, configurations, and effects will become apparent by the following description of embodiments.

### Brief Description of Drawings

Fig. 1 is a side view illustrating a general schematic configuration of a wind power generation device of a first embodiment as an embodiment of the present invention.
Fig. 2 is a top view (plan view) of the wind power generation device illustrated in Fig. 1.
Fig. 3 is a block diagram illustrating functions of a yaw control unit as a component of a control device illustrated in Fig. 1.
Fig. 4 is a diagram illustrating an example of a result of frequency-analyzing accumulation data of a wind direction θw.
Fig. 5 is a diagram illustrating another example of the result of frequency-analyzing accumulation data of the wind direction θw.
Fig. 6 is a flowchart illustrating process outline of the yaw control unit in Fig. 3.
Fig. 7 is a schematic view illustrating effects of the yaw control unit according to the first embodiment.
Fig. 8 is a block diagram illustrating functions of a yaw control unit of a second embodiment as another embodiment of the present invention.
Fig. 9 is a block diagram illustrating functions of a yaw control unit of a third embodiment as another embodiment of the present invention.
Fig. 10 is a block diagram illustrating functions of a yaw control unit of a fifth embodiment as another embodiment of the present invention.

### Description of Embodiments

Hereinafter, embodiments of the present invention will be described with reference to the drawings.

### First Embodiment

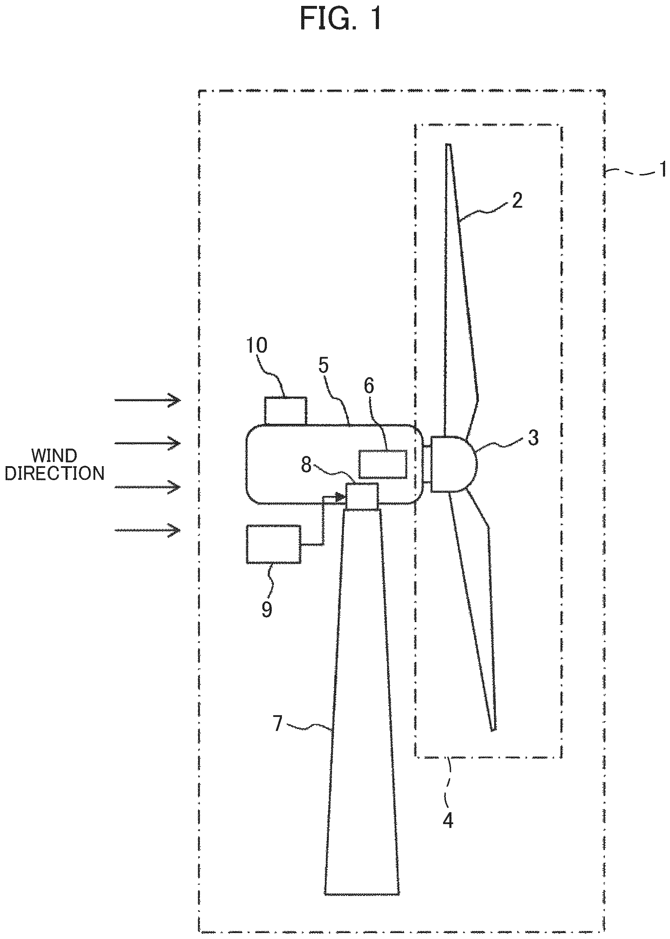

Fig. 1 is a side view illustrating a general schematic configuration of a wind power generation device of a first embodiment as an embodiment of the present invention. As illustrated in Fig. 1, a wind power generation device 1 has a rotor 4 configured by a plurality of blades 2 and a hub 3 connecting the blades 2. The rotor 4 is coupled to a nacelle 5 via a rotary shaft (not illustrated in Fig. 1) and can change the position of the blades 2 by rotation. The nacelle 5 rotatably supports the rotor 4. The nacelle 5 has a power generator 6. When the blades 2 receive wind, the rotor 4 rotates and, by the rotation force, the power generator 6 is rotated. In such a manner, power can be generated.

The nacelle 5 is mounted over a tower 7 and can perform yaw rotation about the vertical axis by a yaw rotation mechanism 8 (also called an adjustment device). A control device 9 controls the yaw rotation mechanism 8 on the basis of a wind direction and a wind velocity Vw detected from a wind direction/wind velocity sensor 10 which detects wind direction and wind velocity. The wind direction/wind velocity sensor 10 may be a lidar (for example, a Doppler lidar), an ultrasonic wind vane anemometer, a cup anemometer, or the like, may be attached to a wind power generation device such as a nacelle or a tower, or may be attached to a mast or the like by a structure which is different from the wind power generation device.

The yaw rotation mechanism 8 is configured by a yaw bearing, a yaw gear (gear for yaw rotation), a yaw rotation motor, a yaw brake, and the like. A pitch actuator capable of changing the angle of the blade 2 with respect to the hub 3, a power sensor detecting active power and reactive power which is output from the power generator 6, and the like are also provided in proper positions. Although Fig. 1 illustrates a down wind type of generating power by wind of a wind direction from the nacelle 5 to the blades 2, an up wind type of generating power by wind of a wind direction from the blades 2 to the nacelle 5 may be also used.

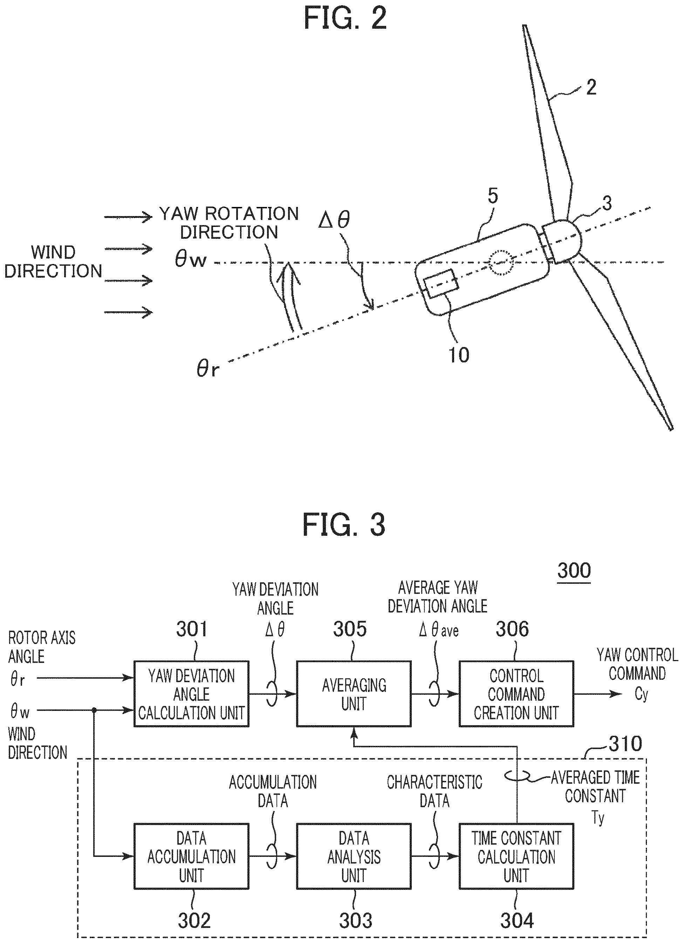

Fig. 2 is a top view (plan view) of Fig. 1. A wind direction formed with a predetermined reference direction is defined as θw, a direction of the rotor rotation axis formed with the predetermined reference direction is defined as θr, and a yaw deviation angle as a deviation angle from the wind direction θw to the rotor axis angle θr is defined as Δθ, and the relations of them are illustrated. The "predetermined reference direction" is set to, for example, a reference direction using the north as 0°. It is not limited to the north but a reference direction may be arbitrarily set. The wind direction θw may be a value obtained every measurement cycle, may be an average direction in a predetermined period, or a direction calculated on the basis of a wind condition distribution of the circumference. The rotor axis angle θr may be a direction of the rotor rotation axis, the direction of the nacelle, a value measured by an encoder in a yaw rotation unit, or the like.

Referring to Figs. 3 to 7, a yaw control unit 300 as a component of the control device 9 of the wind power generation device 1 according to the embodiment will be described.

Fig. 3 is a block diagram illustrating functions of the yaw control unit as a component of the control device illustrated in Fig. 1. As illustrated in Fig. 3, the yaw control unit 300 is constructed by a yaw deviation angle calculation unit 301 obtaining a yaw deviation angle Δθ, a time constant calculation unit 310 calculating an averaged time constant Ty of the yaw deviation angle Δθ, an averaging unit 305 obtaining an average yaw deviation angle Δθave by performing averaging process on the yaw deviation angle Δθ, and a control command creation unit 306 determining a yaw control command Cy which controls start/stop of yaw rotation on the basis of the average yaw deviation angle Δθave. The time constant calculation unit 310 is constructed by a data accumulation unit 302, a data analysis unit 303, and a time constant calculation unit 304.

The yaw deviation angle calculation unit 301 determines a yaw deviation angle Δθ on the basis of the rotor axis angle θr and the wind direction θw. As illustrated in Fig. 2, the yaw deviation angle Δθ is the difference between the wind direction θw and the rotor axis angle θr and indicates a deviation of the rotor axis from the wind direction. The wind direction θw is not limited to a value detected from the wind direction/wind velocity sensor 10 mounted on the nacelle 5 but may be a value set in the ground surface or another place.

The data accumulation unit 302 as a component of the time constant calculation unit 310 in Fig. 3 accumulates data of the wind direction θw detected by the wind direction/wind velocity sensor 10 and outputs accumulation data of the wind direction θw, which is accumulated appropriately. In a third embodiment which will be described later, data of the wind velocity Vw is accumulated in place of the wind direction θw, and accumulation data of the wind velocity Vw, which is accumulated appropriately is output. In the second embodiment, the accumulation data of the wind direction θw is mainly used for calculation of a time constant.

The data analysis unit 303 as a component of the time constant calculation unit 310 outputs characteristic data on the basis of the accumulation data of the wind direction θw. As a method of calculating characteristic data, an accumulation data frequency analysis method is used here.

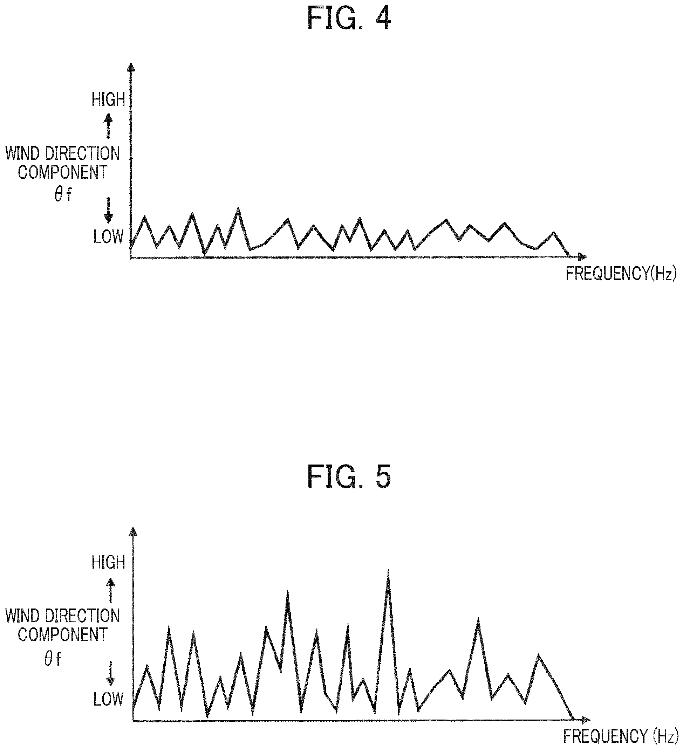

Figs. 4 and 5 illustrate an example of a result of performing frequency analysis on the accumulation data of the wind direction θw. The horizontal axis in Figs. 4 and 5 indicates frequency, and the vertical direction indicates magnitude of the wind direction component θf expressing a fluctuation amount of the wind direction based on the frequency.

Fig. 4 illustrates an example of a result of the frequency analysis in a period in which the wind direction fluctuation is relatively small and is characterized by a point that the wind direction component θf indicates a small value. Fig. 5 illustrates an example of a result of the frequency analysis in a period in which the wind direction fluctuation is relatively larger than that in Fig. 4 and is characterized by a point that the wind direction component θf indicates a large value.

It is sufficient to properly set the frequency domain in accordance with the environment circumstances of a place in which each wind power generation device is installed, calculation capability of the yaw control unit 300, a set value of a filter used in the averaging unit 305, drive speed of yaw rotation, a yaw drive amount, and the like and, preferably, the frequency domain is roughly set in a range from 10⁻⁴ to 10⁻⁰ Hz. More preferably, the frequency domain is set in a range from 10⁻³ to 10⁻¹ Hz.

The range of the frequency domain is limited to a frequency domain of the yaw deviation angle Δθ which can be decreased by yaw control. That is, the above-described values are preferable as the upper limit of the range for the purpose of eliminating a high-frequency component in which the influence of an error caused by the structure of the wind direction/wind velocity sensor 10 or noise appears. The above-described values are preferable as the lower limit of the range for the purpose of eliminating a low-frequency component in which the influence caused by the difference of the values of the averaged time constant Ty becomes small.

After performing the frequency analysis on the accumulation data of the wind direction, an average value or a total value of frequency components in a predetermined period obtained is calculated to obtain characteristic data of the wind conditions.

The time constant calculation unit 304 as a component of the time constant calculation unit 310 illustrated in Fig. 3 determines the averaged time constant Ty of the yaw deviation angle Δθ on the basis of the characteristic data.

Concretely, in the time constant calculation unit 304, the magnitude of the averaged time constant Ty is adjusted so as to be changed between the case where the characteristic data indicating the tendency of Fig. 4 in which the wind direction component θf is small is small and the case where the characteristic data indicating the tendency of Fig. 5 in which the wind direction component θf is large is large. For example, in the case of Fig. 4 in which the wind direction component θf is small, the averaged time constant Ty is set to be large. In the case of Fig. 5 in which the wind direction component θf is large, the averaged time constant Ty is set to be small.

The reason of the method of adjusting the averaged time constant Ty will be described. In the case where the averaged time constant Ty is large, the change of the average yaw deviation angle Δθave becomes gentle, so that response of yaw control becomes slow. As a result, the yaw deviation angle Δθ in a long term becomes large, so that the power generation amount becomes small. Since the yaw drive amount decreases, mechanical wear is reduced. On the other hand, in the case where the averaged time constant Ty is small, the change of the average yaw deviation angle Δθave becomes fast, so that response of yaw control becomes fast. As a result, the yaw deviation angle Δθ in a long term becomes small, so that the power generation amount becomes large. Since the yaw drive amount increases, mechanical wear increases.

At this time, in the case where the wind direction component θf is small, that is, in the case where the frequency of the wind direction fluctuation is low, the effect of reducing the mechanical wear is higher than that of reducing the power generation amount by increasing the averaged time constant Ty, so that it is preferable to increase the averaged time constant Ty. On the other hand, in the case where the wind direction component θf is large, that is, in the case where the frequency of the wind direction fluctuation is high, the effect of improving the power generation amount is higher than that of increasing the mechanical wear by decreasing the averaged time constant Ty, so that it is preferable to decrease the averaged time constant Ty. The above is the reason of the method of adjusting the averaged time constant Ty.

In the embodiment as described above, the time constant calculation unit 310 performs frequency analysis on wind direction data from the wind direction/wind velocity sensor 10 to obtain a frequency component, obtains a total value of frequency components in a predetermined frequency domain every frequency domain, and generates a time constant on the basis of values of the frequency components in the domains.

The time constant calculation unit 340 may not sequentially output the averaged time constant Ty but may output it in an arbitrary cycle or timing.

The averaging unit 305 determines the average yaw deviation angle Δθave on the basis of the yaw deviation angle Δθ and the averaged time constant Ty. An average value of yaw deviation angles Δθ in a period corresponding to the averaged time constant Ty just before is calculated and output as the average yaw deviation angle Δθave.

Alternatively, the averaging unit 305 may be a filter (low-pass filter) of passing only a predetermined frequency domain of the yaw deviation angle Δθ represented by a low-pass filter or a unit performing Fourie transform.

The control command creation unit 306 determines the yaw control command Cy on the basis of the average yaw deviation angle Δθave. In the case where the average yaw deviation angle Δθave becomes large, the yaw control command Cy for starting yaw rotation is output to the yaw rotation mechanism 8. In response to it, the yaw rotation mechanism 8 operates to yaw-rotate the nacelle 5 in the direction of decreasing the yaw deviation angle Δθ. In the case where the average yaw deviation angle Δθave becomes large in a state where the yaw rotation is performed, the yaw control command Cy for stopping the yaw rotation is output to the yaw rotation mechanism 8.

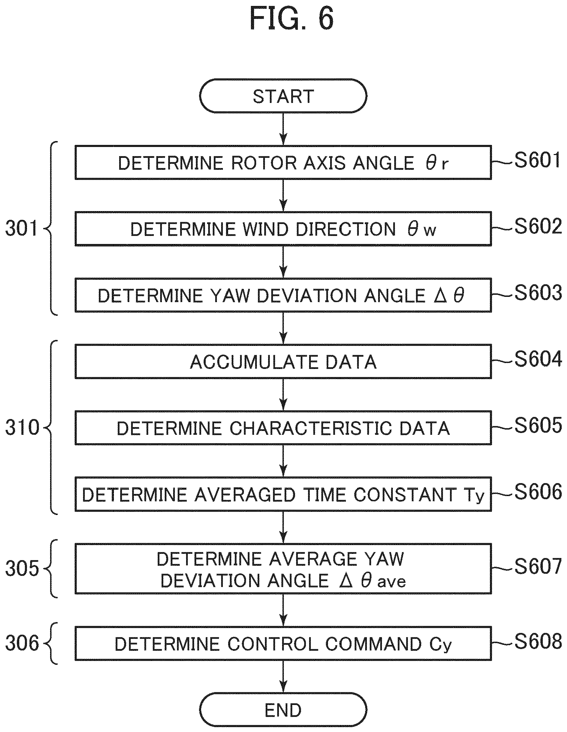

Fig. 6 is a flowchart illustrating outline of processes of the yaw control unit 300 in Fig. 3.

As illustrated in Fig. 6, in step S601, the yaw deviation angle calculation unit 301 determines the rotor axis angle θr, and the process advances to the next step S602. In step S602, the yaw deviation angle calculation unit 301 determines the wind direction θw, and the process advances to the next step S603. In step S603, the yaw deviation angle calculation unit 301 determines the yaw deviation angle Δθ on the basis of the rotor axis angle θr and the wind direction θw, and the process advances to the next step S604. In such a manner, the processes from step S601 to step S603 are executed by the yaw deviation angle calculation unit 301.

In step S604, the data accumulation unit 302 as a component of the time constant calculation unit 310 accumulates the values of the wind direction θw corresponding to time, and the process advances to the next step S605. In step S605, the data analysis unit 303 as a component of the time constant calculation unit 310 determines characteristic data on the basis of the accumulation data, and the process advances to the next step S606. In step S606, the time constant calculation unit 304 as a component of the time constant calculation unit 310 determines the averaged time constant Ty, and the process advances to the next step S607. In such a manner, the processes from step S604 to step S606 are executed by the time constant calculation unit 301.

In step S607, the averaging unit 305 determines the average yaw deviation angle Δθave on the basis of the yaw deviation angle Δθ input from the yaw deviation angle calculation unit 301 and the averaged time constant Ty input from the time constant calculation unit 310, and the process advances to the next step S608. In step S608, the control command creation unit 306 determines the yaw control command Cy on the basis of the average yaw deviation angle Δθave and, after that, the series of the processes are finished.

Next, to clarify the effects of the embodiment, the outline will be described together with operation of a comparative example.

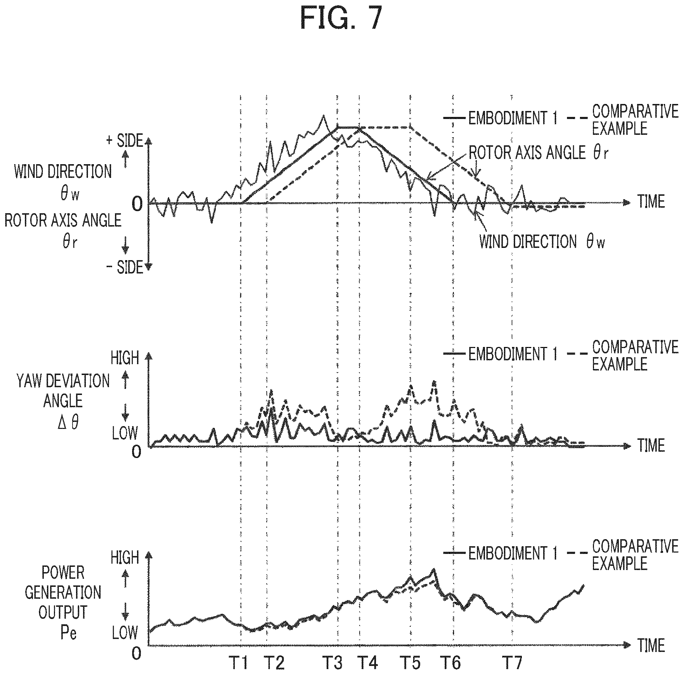

Fig. 7 is an outline diagram illustrating effects of the yaw control unit 300 according to the first embodiment. All of the horizontal axes indicate common time. The vertical axis in the upper part of Fig. 7 indicates the rotor axis angle θr and the wind direction θw, the vertical axis in the middle part of Fig. 7 indicates the yaw deviation angle Δθ, and the vertical axis in the lower part of Fig. 7 indicates the power generation output Pe. The broken lines in Fig. 7 indicate, for example, results of the case where the averaged time constant Ty is always large as a comparative example of the case where the yaw control unit 300 of the embodiment is not applied. On the other hand, the solid lines indicate results of the case where the yaw control unit 300 of the embodiment is applied.

At the time of assessing the comparative results of Fig. 7, as a wind-condition situation, the case where the wind direction fluctuation occurs frequently in a cycle which is fast to some extent is assumed. That is, as illustrated in Fig. 5 described above, the number of the wind direction components θf in an intermediate frequency domain is large. Therefore, the value of the averaged time constant Ty of the embodiment is smaller than that of the comparative example.

As illustrated in the upper part of Fig. 7, the wind direction θw largely fluctuates to the + side while repeating small fluctuations and, after that, immediately largely fluctuates to the - side. In the embodiment, the yaw rotation starts at time T1 and the rotor axis angle θr follows the wind direction θw. On the other hand, in the comparative example, the yaw rotation starts at time T2. Therefore, during the yaw rotation, the followability to the wind direction θw in the embodiment is higher than that in the comparative example, so that, as illustrated in the intermediate part of Fig. 7, the yaw deviation angle Δθ in the period from time T1 to time T3 in the embodiment is smaller than that in the comparative example. Due to this, as illustrated in the lower part of Fig. 7, the power generation output Pe in this period (period from time T1 to time T3) in the embodiment is larger than that in the comparative example. Thus, the present embodiment indicates that the annual power generation amount is larger than that in the comparative example.

As illustrated in the upper part of Fig. 7, the yaw rotation is stopped at time T3 in the embodiment and stopped at time T4 in the comparative example. The time since the rotor axis angle θr crosses the wind direction θw until the yaw rotation is stopped in the present embodiment is shorter than that in the comparative example.

Further, as illustrated in the upper part of Fig. 7, when the wind direction θw largely fluctuates from the + side to the - side, the yaw rotation is started at time T4 in the embodiment, and the yaw rotation is started at time T5 in the comparative example. In the comparative example, the start of the yaw rotation delays from the fluctuation of the wind direction θw more than that at time T2. Therefore, as illustrated in the middle part of Fig. 7, the yaw deviation angle Δθ in the period from time T4 to time T6 in the present embodiment is smaller than that in the comparative example. Consequently, as illustrated in the lower part of Fig. 7, the power generation output Pe in this period (period from time T4 to time T6) in the present embodiment is larger than that in the comparative example.

As described above, according to the embodiment, the wind power generation device and the control method for the same capable of suppressing mechanical wear by suppressing a yaw drive amount while improving the power generation amount by reducing the yaw deviation angle can be provided. Concretely, when wind direction fluctuation is large, by decreasing the averaged time constant Ty, the power generation amount is improved. When the wind direction fluctuation is not large, by increasing the averaged time constant Ty, mechanical wear is reduced. Therefore, in the case where the magnitude and cycle of the wind direction fluctuation vary depending on the place and time, both improvement of the power generation performance of the wind power generation device and reduction of mechanical wear can be realized.

According to the embodiment, by making the yaw deviation angle Δθ small, the wind load applied laterally or obliquely to the wind power generation device decreases, so that there is also an effect for suppression of a breakage and elongation of mechanical life of the wind power generation device.

In addition, there is a case that, for the purpose of preventing application of an excessive load to a wind power generation device, the wind power generation device is provided with a function of immediately suppressing or stopping power generation when the yaw deviation angle Δθ becomes excessive. In the embodiment, the timing of starting the yaw rotation is faster than that in the comparative example and followability to the wind direction θw is good, so that the yaw deviation angle Δθ does not easily become excessive. Therefore, the chance that the yaw deviation angle Δθ becomes excessive and the power generation is suppressed or stopped decreases, so that there is an effect for improvement in the power generation amount.

The time constant calculation unit 304 sets at least the averaged time constant Ty for determining yaw rotation start and/or yaw rotation stop every plural frequency domains, makes the time constant variable, and can switch the control according to the wind direction. Concretely, based on a result of analyzing the frequency of wind direction data, at least the averaged time constant for the yaw rotation start and/or the averaged time constant for determining the yaw rotation stop are generated for a plurality of predetermined frequency domains. The averaging unit generates an average yaw deviation angle which is used for yaw rotation start determination and yaw rotation stop determination on the basis of the averaged time constant for the yaw rotation start and/or the averaged time constant for the yaw rotation stop determination. The control command creation unit 306 generates the yaw control command Cy by switching the average yaw deviation angle between the yaw rotation start and the yaw rotation stop.

### Second Embodiment

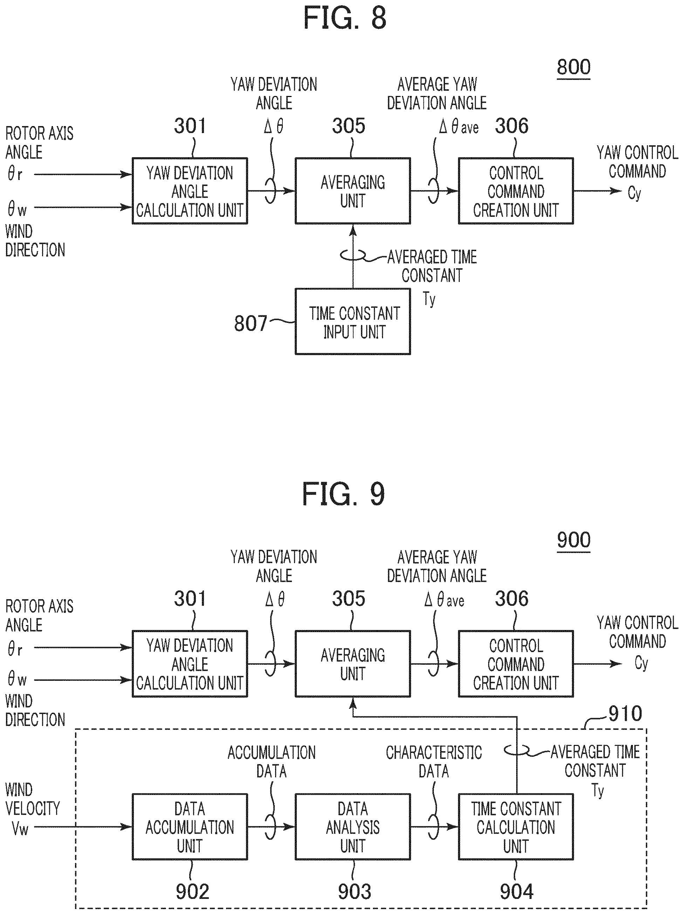

Fig. 8 is a block diagram illustrating functions of a yaw control unit of a second embodiment as another embodiment of the present invention. The present embodiment differs from the foregoing first embodiment with respect to the point that, as the averaged time constant Ty, a value obtained by past experience or calculation is preliminarily set as a fixed set value in the control device 9 and used off-line. The other configuration is similar to the first embodiment. In Fig. 8, the same reference numerals are designated to components similar to those of the first embodiment.

In the first embodiment, as illustrated in Figs. 3 and 6, the time constant calculation unit 310 calculates and updates the averaged time constant Ty every control cycle or at proper timings. On the other hand, a yaw control unit 800 of the present embodiment illustrated in Fig. 8 is configured by the yaw deviation angle calculation unit 301 obtaining the yaw deviation angle Δθ, the averaging unit 305 performing the averaging process on the yaw deviation angles Δθ to obtain the average yaw deviation angle Δθave, and the control command creation unit 306 determining the yaw control command Cy which controls start/stop of yaw rotation on the basis of the average yaw deviation angle Δθave, and does not have the time constant calculation unit 310 calculating the average yaw deviation angle Δθave. The averaged time constant Ty given to the averaging unit 305 is preset in the averaging unit 305 as a component of the yaw control unit 800 or set from the outside by a time constant input unit 807 at a proper timing. The time constant input unit 807 is an input device such as a keyboard and data may be entered by an operator.

The functions of the time constant calculation unit 310 described in the first embodiment are configured in an analysis device which is provided in a place different from a wind power station. For example, the averaged time constant Ty in typical wind conditions of a wind power station is calculated in advance from environment conditions obtained at a study/design stage before construction of the wind power station, and stored as a preset value in the yaw control unit 800. Typical wind conditions may be prepared, for example, every season or every evening or morning and switched and used under proper conditions.

Alternatively, the functions of the time constant calculation unit 310 described in the first embodiment are configured in an analysis device which is provided in a place different from a wind power station. For example, the averaged time constant Ty in typical wind conditions of the wind power station is calculated from environment conditions measured at a use stage after installation of the wind power station, and given to the averaging unit 305 in the yaw control unit 800 via the time constant input unit 807 having a communication unit. In this case, setting of the averaged time constant Ty is not of a form which promptly corresponds to the wind conditions at a site online, but a value obtained offline is given and used at a proper timing.

According to the second embodiment as described above, it is unnecessary to provide a windmill with an analysis device. It can be updated so as to provide an existing windmill with the control of the present invention without a large modification, and a control based on an optimized time constant can be performed.

### Third Embodiment

Fig. 9 is a block diagram illustrating functions of a yaw control unit of a third embodiment as another embodiment of the present invention. The present embodiment differs from the foregoing first embodiment with respect to the point that a data accumulation unit 902 as a part of a time constant calculation unit 910 of a yaw control unit 900 accumulates data of the wind velocity Vw in place of the wind direction θw. The other configuration is similar to the first embodiment. In Fig. 9, the same reference numerals are designated to components similar to those of the first embodiment.

As illustrated in Fig. 9, the yaw control unit 900 includes the yaw deviation angle calculation unit 301 obtaining the yaw deviation angle Δθ, the time constant calculation unit 910 calculating the averaged time constant Ty of the yaw deviation angle Δθ, the averaging unit 305 performing averaging process on the yaw deviation angle Δθ to obtain the average yaw deviation angle Δθave, and the control command creation unit 306 determining the yaw control command Cy controlling start/stop of the yaw rotation on the basis of the average yaw deviation angle Δθave. The time constant calculation unit 910 is configured by the data accumulation unit 902, a data analysis unit 903, and a time constant calculation unit 904.

In the yaw control unit 900 of the present embodiment, the yaw deviation angle calculation unit 301, the averaging unit 305, and the control command creation unit 306 are similar to those of the first embodiment. It differs from the first embodiment with respect to the point that an input of the data accumulation unit 902 as a component of the time constant calculation unit 910 is the wind velocity Vw.

The data accumulation unit 902 as a component of the time constant calculation unit 910 outputs accumulation data of the wind velocity Vw on the basis of the wind velocity Vw detected from the wind direction/wind velocity sensor 10. The wind velocity Vw measured here is detected by the wind direction/wind velocity sensor 10 fixed to the nacelle 5 and is a wind velocity in a direction of the nacelle 5 at that time point.

The data analysis unit 903 as a component of the time constant calculation unit 910 outputs characteristic data on the basis of the accumulation data of the wind velocity Vw. The characteristic data in this case is turbulence intensity lref in a predetermined period. The turbulence intensity lref is obtained by the ratio between the standard deviation Vv of the wind velocity in a predetermined period and the average value Vave of the wind velocity. That is, by computing the following equation (1), the data analysis unit 903 outputs the turbulence intensity lref as the characteristic data. $lref = Vv / Vave$ (1)

The time constant calculation unit 904 as a component of the time constant calculation unit 910 determines the averaged time constant Ty on the basis of the turbulence intensity lref as characteristic data. When the wind condition is heavy, that is, when the turbulence intensity lref is high, the averaged time constant Ty is decreased. When the wind condition is gentle, that is, when the turbulence intensity lref is low, the averaged time constant Ty is increased.

This is because an average value and a total value of the frequency components in the wind direction θw in the first embodiment and the turbulence intensity lref in the third embodiment have a positive correlation and, when the wind direction fluctuation is heavy, the turbulence intensity lref is high, and when the wind direction fluctuation is gentle, the turbulence intensity lref is low.

According to the present embodiment as described above, by applying the process of the yaw control unit 900, effects similar to those of the first embodiment can be realized by the simpler process.

### Fourth Embodiment

Next, the wind power generation device 1 of a fourth embodiment as another embodiment of the present invention will be described.

The wind power generation device 1 of the present embodiment has the same configuration as that of the yaw control unit 300 of the first embodiment but is different from the first embodiment with respect to processes in the data analysis unit 303 and the time constant calculation unit 304.

In the data analysis unit 303 as a component of the time constant calculation unit 310 of the present embodiment, a standard deviation σ of the wind direction θw in a predetermined period is calculated by statistic analysis on the basis of the wind direction θw and output as characteristic data of the wind condition.

The time constant calculation unit 304 as a component of the time constant calculation unit 310 determines the averaged time constant Ty of yaw control on the basis of the standard deviation σ as characteristic data. When the standard deviation σ of the wind direction θw is relatively large, the averaged time constant Ty is decreased. When the standard deviation σ of the wind direction θw is relatively small, the averaged time constant Ty is decreased.

The reason is that an average value and a total value of the frequency components of the wind direction θw in the first embodiment and the standard deviation σ of the wind direction θw in the present embodiment have a positive correlation and, when the wind direction fluctuation is large, the standard deviation σ of the wind direction θw becomes large, and when the wind direction fluctuation is gentle, the standard deviation σ of the wind direction θw becomes small.

As described above, according to the present embodiment, effects similar to those of the first embodiment can be realized by the simpler process.

### Fifth Embodiment

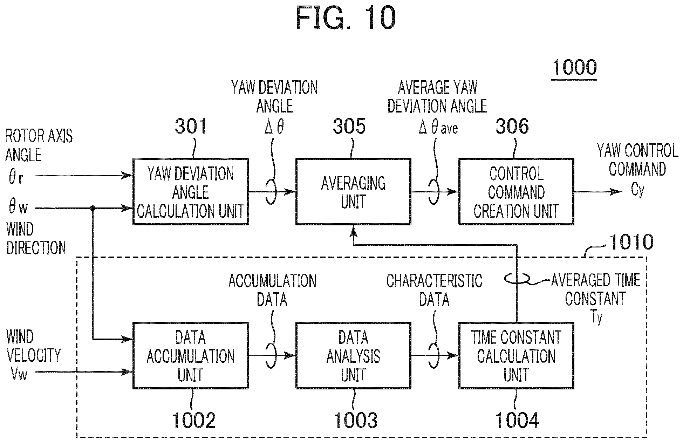

Fig. 10 is a block diagram illustrating functions of a yaw control unit of a fifth embodiment as another embodiment of the present invention. The present embodiment differs from the first embodiment with respect to the point that a data accumulation unit 1002 as a component of a time constant calculation unit 1010 of a yaw control unit 1000 accumulates data of the vehicle velocity Vw in addition to the wind direction θw. The other configuration is similar to that of the first embodiment. In Fig. 10, the same reference numerals are designated to components similar to those of the first embodiment.

As illustrated in Fig. 10, the yaw control unit 1000 is configured by the yaw deviation angle calculation unit 301 obtaining the yaw deviation angle Δθ, the time constant calculation unit 1010 calculating the averaged time constant Ty of the yaw deviation angle Δθ, the averaging unit 305 performing averaging process on the yaw deviation angle Δθ to obtain the average yaw deviation angle Δθave, and the control command creation unit 306 determining the yaw control command Cy controlling start/stop of yaw rotation on the basis of the average yaw deviation angle Δθave. The time constant calculation unit 1010 is configured by the data accumulation unit 1002, a data analysis unit 1003, and a time constant calculation unit 1004.

In the yaw control unit 1000 of the present embodiment, the yaw deviation angle calculation unit 301, the averaging unit 305, and the control command creation unit 306 are similar to those of the first embodiment. It differs from the first embodiment with respect to the point that the wind velocity Vw is added to an input of the data accumulation unit 1002 as a component of the time constant calculation unit 1010.

The data accumulation unit 1002 as a component of the time constant calculation unit 1010 outputs accumulation data of the wind direction θw and the wind velocity Vw on the basis of the wind direction θw and the wind velocity Vw detected from the wind direction/wind velocity sensor 10. The wind velocity Vw measured here is detected by the wind direction/wind velocity sensor 10 fixed to the nacelle 5 and is a wind velocity in a direction of the nacelle 5 at that time point.

The data analysis unit 1003 as a component of the time constant calculation unit 1010 outputs characteristic data on the basis of the accumulation data of the wind direction θw. Based on the accumulation data of the wind velocity Vw, average wind velocity Vwave in a predetermined period is output.

The time constant calculation unit 1004 as a component of the time constant calculation unit 1010 determines the averaged time constant Ty on the basis of characteristic data in a manner similar to the first embodiment and, when the average wind velocity Vwave is low and power is not generated and/or when the average wind velocity Vwave is high and an output reaches a rated output, sets the averaged time constant Ty to a large value. The reason is that when the average wind velocity Vwave is low and no power is generated and when the average wind velocity Vwave is high and an output reaches rated output, if the averaged time constant Ty is decreased and followability of the nacelle azimuth with respect to the wind direction θw is increased, the power generation amount is not improved or is improved a little whereas when the yaw drive amount increases, mechanical wear increases.

According to the present embodiment as described above, the power generation amount can be improved to the same degree as the first embodiment and the mechanical wear can be reduced more than the first embodiment.

The present invention is not limited to the foregoing embodiments but can be variously modified. The forgoing embodiments have been described to make the present invention easily understood and are not necessarily limited to a configuration having all of the components described. A part of the configuration of an embodiment can be replaced with a component of another embodiment, and a component of an embodiment can be added to the configuration of another embodiment. The control lines and information lines illustrated in the drawings are considered to be necessary for the description. All of control lines and information lines necessary for a product are not always illustrated. It may be considered that almost all of the components are mutually connected in practice.

As possible modifications of the above-described embodiments, for example, the following can be mentioned.
(1) The data accumulation unit 302, the data analysis unit 303, and the time constant calculation unit 304 in the yaw control units 300, 800, 900, and 1000 may be provided for an external device in place of the control device 9.
(2) The averaged time constant Ty of the yaw control calculated in the foregoing embodiments may be applied to another wind power generation device 1 in the same site or a wind power generation device 1 in another site whose wind conditions are similar.
(3) The data accumulation unit 302 in the yaw control units 300, 800, 900, and 1000 may have a configuration of holding only wind condition data accumulated in the past without sequentially inputting wind condition data such as the wind direction θw.
(4) Although the wind direction/wind velocity sensor 10 is installed on the nacelle 5 in each of the foregoing embodiments, instead of this place, it may be installed in the nacelle 5 or around the wind power generation device 1.

### List of Reference Signs

- 1: wind power generation device
- 2: blade
- 3: hub
- 4: rotor
- 5: nacelle
- 6: power generator
- 7: tower
- 8: yaw rotation mechanism
- 9: control device
- 10: wind direction/wind velocity sensor
- 300, 800, 900, 1000: yaw control unit
- 301: yaw deviation angle calculation unit
- 302, 902, 1002: data accumulation unit
- 303, 903, 1003: data analysis unit
- 304, 904, 1004: time constant calculation unit
- 305: averaging unit
- 306: control command creation unit
- 310, 910, 1010: time constant calculation unit
- 807: time constant input unit

## Claims

1. A wind power generation device comprising: a rotor that rotates upon receiving wind; a nacelle that rotatably supports the rotor; a tower that supports the nacelle in a yaw rotatable manner; an adjustment device that adjusts the yaw of the nacelle on the basis of a yaw control command; and a control device that determines the yaw control command to be sent to the adjustment device,
wherein the control device has: a yaw deviation angle calculation unit that calculates a yaw deviation angle from the wind direction measured by a wind direction/wind velocity measuring unit and the direction of the rotor; an averaging unit that averages the yaw deviation angle within a predetermined period; and a control command creation unit that determines the yaw control command on the basis of an average yaw deviation angle, and
wherein when the level of disturbance in the wind conditions is high, the averaging unit decreases an averaged time constant and advances the timing of start of yaw rotation and/or stop of yaw rotation with respect to the yaw deviation angle.

2. The wind power generation device according to claim 1, wherein the averaged time constant is preliminarily set in the averaging unit.

3. The wind power generation device according to claim 1, wherein the averaged time constant is set from the outside of the wind power generation device via a communication unit.

4. The wind power generation device according to claim 1, wherein the control device has a time constant calculation unit that calculates at least an averaged time constant for obtaining the average yaw deviation angle used for determination of yaw control start and/or yaw control end.

5. The wind power generation device according to claim 4, wherein the time constant calculation unit performs frequency analysis on a wind direction measured by the wind direction/wind velocity measuring unit to obtain a frequency component and, on the basis of a value of the frequency component of a predetermined frequency domain, calculates at least an averaged time constant for obtaining the average yaw deviation angle used for determination of yaw control start and/or yaw control end.

6. The wind power generation device according to claim 4, wherein the time constant calculation unit obtains a standard deviation of wind velocity and an average value of wind velocity in a predetermined period from wind velocity measured by the wind direction/wind velocity measuring unit and, on the basis of turbulence intensity obtained by dividing standard deviation of the wind velocity by an average value of the wind velocity, calculates at least an averaged time constant for obtaining the average yaw deviation angle used for determination of yaw control start and/or yaw control end.

7. The wind power generation device according to claim 4, wherein the time constant calculation unit obtains standard deviation of a wind direction from the wind direction measured by the wind direction/wind velocity measuring unit and, on the basis of the standard deviation of the wind direction, calculates at least an averaged time constant for obtaining the average yaw deviation angle used for determination of yaw control start and/or yaw control end.

8. The wind power generation device according to claim 5, wherein the time constant calculation unit uses either a low-pass filter or Fourier transform for frequency analysis.

9. A control method of a wind power generation device comprising: a rotor that rotates upon receiving wind; a nacelle that rotatably supports the rotor; a tower that supports the nacelle in a yaw rotatable manner; an adjustment device that adjusts the yaw of the nacelle on the basis of a yaw control command; and a control device that determines the yaw control command to be sent to the adjustment device, comprising:
calculating a yaw deviation angle from a measured wind direction and the direction of the rotor;
averaging the yaw deviation angle within a predetermined period to obtain an average yaw deviation angle;
when the level of disturbance in wind conditions is high, decreasing an averaged time constant, and advancing the timing of start of yaw rotation and/or stop of yaw rotation with respect to the yaw deviation angle.

10. The control method of a wind power generation device according to claim 9, wherein at least the averaged time constant for obtaining the average yaw deviation angle used for determination of yaw control start and/or yaw control end is calculated.

11. The control method of a wind power generation device according to claim 10, wherein frequency analysis is performed on the measured wind direction to obtain a frequency component and, on the basis of a value of the frequency component of a predetermined frequency domain, at least an averaged time constant for obtaining the average yaw deviation angle used for determination of yaw control start and/or yaw control end is calculated.

12. The control method of a wind power generation device according to claim 10, wherein a standard deviation of wind velocity and an average value of wind velocity in a predetermined period are obtained from measured wind velocity and, on the basis of turbulence intensity obtained by dividing standard deviation of the wind velocity by an average value of the wind velocity, at least an averaged time constant for obtaining the average yaw deviation angle used for determination of yaw control start and/or yaw control end is calculated.

13. The control method of a wind power generation device according to claim 10, wherein standard deviation of a wind direction is obtained from the measured wind direction and, on the basis of the standard deviation of the wind direction, at least an averaged time constant for obtaining the average yaw deviation angle used for determination of yaw control start and/or yaw control end is calculated.
